# FASCICULE DE BREVET EUROPEEN

(11) **EP 2 000 617 B1**
(45) Date de publication et mention de la délivrance du brevet: **11.08.2010**
(21) Numéro de dépôt: 08300219.6
(22) Date de dépôt: 04.06.2008
(51) Int. Cl.: E05B 65/20, B60J 5/10, B62D 25/10

(54) **Bandeau de hayon de véhicule automobile**
Abdeckleiste für die Heckklappe eines Kraftfahrzeugs
Automobile tailgate skirt

(30) Priorité: 08.06.2007 FR 0755614
(43) Date de publication de la demande: 10.12.2008
(73) Titulaire: Renault S.A.S., 92100 Boulogne-Billancourt (FR)
(72) Inventeur: Khazaal, Julien, 78310, Maurepas (FR); Pourrias, Jean-Yves, 92160, Antony (FR); Simon, Marc, 93130, Noisy le Sec (FR)

(56) Documents cités:
- FR-A- 2 875 473
- US-A1- 2006 037 850

## Description

Le sujet de cette invention est un bandeau de hayon de véhicule automobile, tel que défini dans le préambule de la revendication 1 et connu par exemple du document FR 2 875 473 A1.

Les bandeaux dont il est traité ici sont placées au bas du hayon notamment pour améliorer son aspect. Ils abritent au moins une cavité donnant sur la face inférieure du hayon et dans laquelle le possesseur du véhicule glisse les doigts pour accéder à un mécanisme d'ouverture du coffre.

On a aspiré à chromer ces bandeaux afin d'embellir encore les véhicules, mais les résultats sont mauvais sur les bandeaux existants puisque le chromage fait apparaître beaucoup mieux les retassures et les défauts de surface du bandeau.

L'objet de l'invention est de rendre possible le chromage d'un bandeau de hayon de véhicule automobile de façon compatible avec un bon aspect.

Les inventeurs ont conclu que les défauts constatés sur des bandeaux existants avaient pour origine les surépaisseurs ou les nervures qu'il faut ajouter autour de la cavité afin de raidir le bandeau à cet endroit et de procurer de la sorte un contact ferme, donnant l'impression de solidité, quand le coffre est ouvert, puisque les variations d'épaisseur et en général les concentrations de matière accroissent localement les défauts de surface à la solidification des pièces moulées.

C'est pourquoi les bandeaux de hayon proposés ici ont pour originalité de posséder une épaisseur relativement uniforme sur leur étendue et surtout autour de la cavité destinée au mécanisme d'ouverture du coffre ; mais cette disposition pourra être généralisée aux alentours des autres cavités qui sont généralement percées à travers le bandeau pour assurer l'éclairage. La surépaisseur ou les nervures sont remplacées par une pièce rapportée qui confère la rigidité et l'impression de solidité désirée.

Sous sa forme la plus générale, l'invention concerne un bandeau de hayon de véhicule automobile, comprenant une portion principale comprenant un enjoliveur transversal donnant sur l'extérieur du véhicule mais aussi au moins une plaquette raccordée à une face interne de l'enjoliveur, s'étendant vers l'intérieur du véhicule et pourvue d'une ouverture d'accès à un mécanisme d'ouverture du hayon, donnant sur une cavité de préhension située en avant de l'enjoliveur et sous la plaquette, caractérisé en ce que le bandeau comprend une pièce de renfort de l'enjoliveur, comportant une face inférieure en lèvre recourbée, engagée dans une rainure correspondante de l'enjoliveur pour réaliser un accrochage de ladite pièce de renfort, et comportant une face d'appui sur la plaquette, pour arc-bouter ladite pièce de renfort sur la plaquette et l'enjoliveur distincte de l'enjoliveur. Cela permet à l'enjoliveur d'être chromé.

La pièce de renfort est avantageusement en plastique pour un coût réduit et une fabrication plus facile. Il est avantageux qu'elle présente une face d'appui sur la plaquette, une face principale lisse délimitant les cavités et une face d'accrochage à l'enjoliveur pour permettre un arc-boutement sur le bandeau propice à la fixation tout en procurant un contact agréable grâce à la face principale lisse.

Elle peut être favorablement encliquetée dans la cavité entre l'enjoliveur en profitant de sa souplesse et de celle de l'enjoliveur, devenu mince dans cette conception particulière, sans qu'une pièce supplémentaire de fixation soit nécessaire.

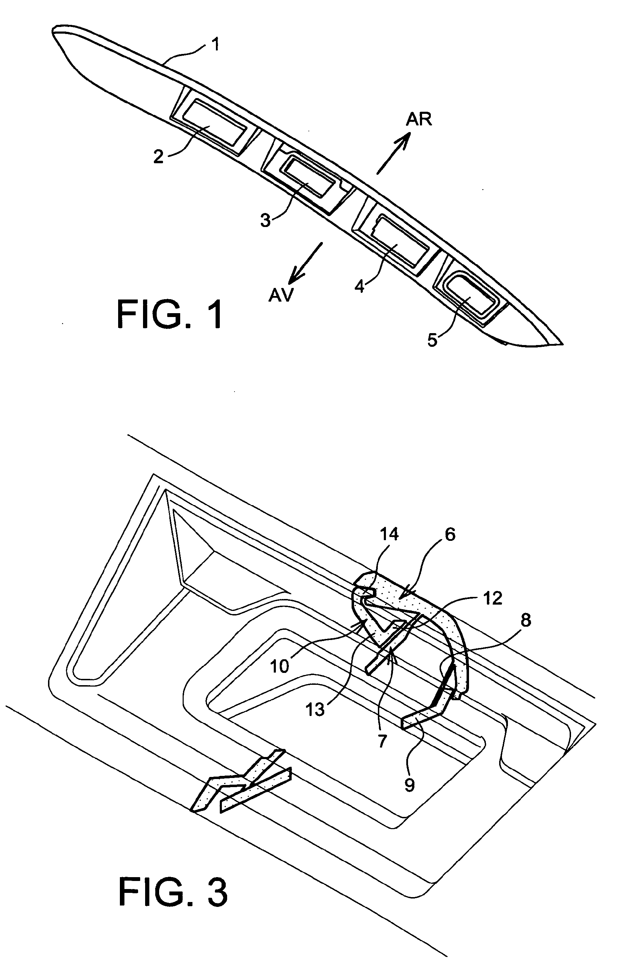

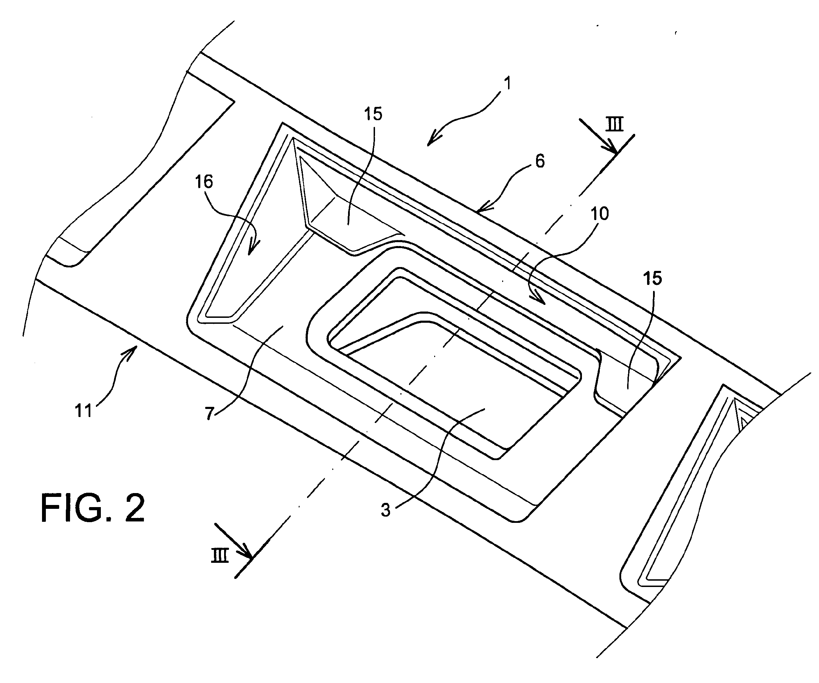

L'invention sera décrite en liaison aux figures, dont la figure 1 est une vue générale du bandeau, la figure 2 est une vue de détail agrandie présentant l'invention et les parties connexes, et la figure 3 est une coupe prise selon la ligne III-III de la figure 2.

La figure 1 représente de façon partielle un bandeau 1 de hayon de véhicule automobile conforme à l'invention en vue de dessous, et les directions avant et arrière du véhicule sont indiquées par les flèches AV et AR respectivement. Le bandeau 1 comprend quatre ouvertures 2, 3, 4 et 5 de gauche à droite destinées au passage des matériels et des fils électriques d'éclairage latéral droit, d'ouverture du coffre, d'éclairage de la plaque d'immatriculation et d'éclairage latéral gauche respectivement. Il est en relief de manière à former des cavités autour de chacune des ouvertures 2, 3, 4 et 5. L'invention équipe au moins la cavité et l'ouverture 3 destinées au mécanisme d'ouverture de verrouillage du coffre, ce qu'on va décrire maintenant en liaison à la figure 2. La figure 3 fournit une illustration supplémentaire.

Le bandeau 1 se compose à cet endroit d'un enjoliveur 6 bombé à l'arrière du véhicule et s'étendant transversalement sur la largeur, d'une plaquette 7 s'étendant d'une partie inférieure de l'enjoliveur 6 vers l'intérieur du véhicule et d'une bordure 8 s'étendant d'une partie supérieure de l'enjoliveur aussi vers l'intérieur du véhicule, et d'une semelle d'étanchéité 9 collée à la bordure 8 sur une partie de son périmètre et sur la plaquette 7 à une partie opposée de son périmètre. L'ouverture 3 est établie à travers la plaquette 7. Le bandeau 1 forme donc une cavité de préhension autour de l'ouverture 3, dans laquelle le possesseur du véhicule glisse les doigts par-dessous l'enjoliveur 6 pour accéder au mécanisme d'ouverture du coffre et lever le hayon. On remarquera à la figure 3 que l'enjoliveur 6 a une épaisseur qui varie peu selon la hauteur, et que la plaquette 7 et la bordure 8 n'impliquent pas de concentrations de matière importantes près de l'enjoliveur 6 grâce à leur finesse. L'élément essentiel de l'invention est une pièce de renfort 10 engagée dans une cavité 11 formée en particulier par l'enjoliveur 6 et la plaquette 7 et qui comprend, comme la figure le montre bien, une face 12 en contact avec la plaquette 7, une face principale 13, lisse et délimitant la cavité 11, et une face 14 inférieure en lèvre recourbée, engagée dans une rainure correspondante de l'enjoliveur 6 pour réaliser un accrochage de la pièce de renfort 10. La superficie d'appui sur la plaquette 7 de la face 12 peut être accrue par des ailes 15 saillant de la face principale 13 vers l'intérieur du véhicule de deux côtés de l'ouverture 3.

La pièce de renfort 10 accroît la raideur de l'enjoliveur 6 sans imposer d'accroissement d'épaisseur à celui-ci. Elle est en plastique. Sa face 13, étant lisse, donne une sensation agréable à la personne qui met les doigts dans la cavité 11. La pièce de renfort 10 est arc-boutée sur la plaquette 7 et l'enjoliveur 6, et ses extrémités touchent des cloisons 16 du bandeau 1 qui délimite latéralement la cavité 11. Ces deux particularités contribuent à maintenir la pièce de renfort 10 en place, mais il est préférable de l'encliqueter pour qu'elle reste plus sûrement en place.

Il est donc possible de chromer l'enjoliveur 6 sans crainte que son aspect n'en soit altéré.

## Revendications

1. Bandeau (1) de hayon de véhicule automobile, comprenant une portion principale comprenant un enjoliveur (6) transversal donnant sur l'extérieur du véhicule mais aussi au moins une plaquette (7) raccordée à une face interne de l'enjoliveur, s'étendant vers l'intérieur du véhicule et pourvue d'une ouverture (3) d'accès à un mécanisme d'ouverture du hayon, donnant sur une cavité de préhension (11) située devant l'enjoliveur et sous la plaquette, **caractérisé en ce que** le bandeau (1) comprend une pièce de renfort (10) de renfort de l'enjoliveur, distincte de l'enjoliveur, comportant une face inférieure (14) en lèvre recourbée engagée dans une rainure correspondante de l'enjoliveur (6) pour réaliser un accrochage de ladite pièce de renfort (10), et comportant une face d'appui (12) sur la plaquette (7), pour arc-bouter ladite pièce de renfort (10) sur la plaquette (7) et l'enjoliveur (6).

2. Bandeau de hayon selon la revendication 1, **caractérisé en ce que** la pièce de renfort est en plastique.

3. Bandeau de hayon de véhicule selon l'une des revendications 1 ou 2, **caractérisé en ce que** la pièce de renfort comporte une face principale lisse (13) délimitant la cavité.

4. Bandeau de hayon de véhicule selon l'une des revendications 1 à 3, **caractérisé ce que** la pièce de renfort est encliquetée dans la cavité (11) contre l'enjoliveur (6)

5. Bandeau de hayon de véhicule selon l'une des revendictions 1 à 4, **caractérisé en ce que** l'enjoliveur est chromé.

## Claims

1. Motor vehicle tailgate skirt (1) comprising a main portion comprising a transverse trim (6) giving onto the exterior of the vehicle but also at least one plate (7) attached to an internal face of the trim, extending towards the inside of the vehicle and provided with an opening (3) for accessing a mechanism for opening the tailgate, giving onto a grasping cavity (11) situated in front of the trim and under the plate, **characterized in that** the skirt (1) comprises a reinforcing piece (10) for reinforcing the trim, separate from the trim, comprising a lower face (14) in the form of a curled lip fitted into a corresponding groove in the trim (6) to attach the said reinforcing piece (10), and comprising a bearing face (12) for bearing on the plate (7) so as to brace the said reinforcing piece (10) against the plate (7) and the trim (6).

2. Tailgate skirt according to Claim 1, **characterized in that** the reinforcing piece is made of plastic.

3. Vehicle tailgate skirt according to one of Claims 1 and 2, **characterized in that** the reinforcing piece has a smooth main face (13) delimiting the cavity.

4. Vehicle tailgate skirt according to one of Claims 1 to 3, **characterized in that** the reinforcing piece is clipped into the cavity (11) against the trim (6).

5. Vehicle tailgate skirt according to one of Claims 1 to 4, **characterized in that** the trim is chrome plated.

## Patentansprüche

1. Abdeckleiste (1) für die Heckklappe eines Kraftfahrzeugs mit einem Hauptteil mit einer auf der Außenseite des Fahrzeugs vorgesehenen Querzierkappe (6), aber auch mindestens einer mit einer Innenfläche der Zierkappe verbundenen Platte (7), die sich zu dem Innenraum des Fahrzeugs erstreckt und in der eine Öffnung (3) für Zugang zu einem Mechanismus zum Öffnen der Heckklappe ausgebildet ist, die über einem Greifhohlraum (11) vorgesehen ist, der sich vor der Zierkappe und unter der Platte befindet, **dadurch gekennzeichnet, dass** die Abdeckleiste (1) ein Verstärkungsteil (10) zur Verstärkung der Zierkappe aufweist, das von der Zierkappe verschieden ist und eine als gekrümmte Lippe ausgebildete Innenfläche (14) aufweist, die in einer entsprechenden Nut der Zierkappe (6) in Eingriff steht, um eine Befestigung des Verstärkungsteils (10) zu realisieren, und eine Stützfläche (12) an der Platte (7) aufweist, um das Verstärkungsteil (10) auf der Platte (7) und der Zierkappe (6) zu verstreben.

2. Heckklappen-Abdeckleiste nach Anspruch 1, **dadurch gekennzeichnet, dass** das Verstärkungsteil aus Kunststoff besteht.

3. Abdeckleiste für die Heckklappe eines Fahrzeugs nach Anspruch 1 oder 2, **dadurch gekennzeichnet, dass** das Verstärkungsteil eine glatte Hauptfläche (13) aufweist, die den Hohlraum begrenzt.

4. Abdeckleiste für die Heckklappe eines Fahrzeugs nach einem der Ansprüche 1 bis 3, **dadurch gekennzeichnet, dass** das Verstärkungsteil in dem Hohlraum (11) gegen die Zierkappe (6) eingerastet wird.

5. Abdeckleiste für die Heckklappe eines Fahrzeugs nach einem der Ansprüche 1 bis 4, **dadurch gekennzeichnet, dass** die Zierkappe verchromt ist.
